# EUROPÄISCHE PATENTSCHRIFT

(11) **EP 1 192 401 B1**
(45) Veröffentlichungstag und Bekanntmachung des Hinweises auf die Patenterteilung: **02.01.2003**
(21) Anmeldenummer: 00935057.0
(22) Anmeldetag: 18.05.2000
(51) Int. Cl.: F27D 3/00, C21C 7/10

(54) **VERFAHREN UND ANLAGE ZUM BEHANDELN VON FLÜSSIGEN METALLEN**
METHOD AND SYSTEM FOR THE TREATMENT OF LIQUID METALS
PROCEDE ET DISPOSITIF POUR LE TRAITEMENT DE METAUX LIQUIDES

(30) Priorität: 20.05.1999 DE 19923205
(43) Veröffentlichungstag der Anmeldung: 03.04.2002
(73) Patentinhaber: Sms Mevac Gmbh, 45141 Essen (DE)
(72) Erfinder: TEWORTE, Rainer, D-58239 Schwerte (DE); RAPPEN, Thomas, D-44625 Herne (DE); WAHLE, Hans-Jürgen, D-44149 Dortmund (DE)
(74) Vertreter: König, Gregor Sebastian, Dipl.-Biol.
(86) Internationale Anmeldenummer: EP0004485
(87) Internationale Veröffentlichungsnummer: WO00071955

(56) Entgegenhaltungen:
- DE-B- 1 215 186
- FR-A- 1 435 973
- GB-A- 1 129 726
- US-A- 3 345 055
- PATENT ABSTRACTS OF JAPAN vol. 2000, no. 03, 30. März 2000 (2000-03-30) & JP 11 335721 A (SUMITOMO METAL IND LTD), 7. Dezember 1999 (1999-12-07)
- PATENT ABSTRACTS OF JAPAN vol. 004, no. 077 (C-013), 4. Juni 1980 (1980-06-04) & JP 55 041946 A (MITSUBISHI HEAVY IND LTD), 25. März 1980 (1980-03-25)
- PATENT ABSTRACTS OF JAPAN vol. 1997, no. 08, 29. August 1997 (1997-08-29) & JP 09 111330 A (SUMITOMO METAL IND LTD), 28. April 1997 (1997-04-28)

## Beschreibung

Die Erfindung betrifft ein Verfahren zum Vakuumbehandeln flüssiger Metalle, insbesondere von Stahl, in einer sekundärmetallurgischen Anlage mit Zugabestoffen, insbesondere Desoxidations- und/oder Legierungsmitteln, deren Mengen nach einer Basisprobe und der Sollanalyse ermittelt, abgewogen und bereitgestellt werden.

Ein solches Verfahren wird vor allem deshalb durchgeführt, um einer Schmelze die gewünschte Zusammensetzung und andere Eigenschaften wie z. B. die erforderliche Gießtemperatur zu geben. Die inerte Atmosphäre eines ausreichend großen Vakuums eignet sich hierfür besonders gut. Dies erfordert jedoch ein gasdicht verschließbares Vakuumgefäß, in das die Schmelze eingebracht und in dem ein Vakuum erzeugt wird, wobei die Gase abgesaugt werden. Die Erzeugung eines solchen Vakuums allein reicht in aller Regel für die Behandlung nicht aus, sondern es müssen auch verschiedene Zugabestoffe in den richtigen Mengen und zum richtigen Zeitpunkt der Schmelze zugeführt werden. Um die Zugabestoffe der Schmelze im Vakuumgefäß von außen zuführen zu können und gleichzeitig das Vakuum aufrechtzuerhalten, besitzen Anlagen zur Durchführung eines solchen Verfahrens eine Vakuumschleuse. Diese besteht aus einer Schleusenkammer, die beispielsweise über ein Beschickungsrohr mit dem Innenraum des Vakuumgefäßes verbunden ist, und einem oberhalb der Schleusenkammer angeordneten und mit deren Innenraum verbundenen Zugabetrichter. Die Schleusenkammer und der Zugabetrichter weisen untere Auslaßöffnungen auf, die mit gasdichten Verschlüssen versehen sind.

Zu einem solchen Verfahren gehört auch das Bereitstellen und Einbringen der Zugabestoffe wie zum Beispiel Desoxidationsmittel, Legierungsmittel, Kühlschrott und ähnliches in die Vakuumschleuse. Die Zugabestoffe werden in getrennten Beschickungsbunkem vorrätig gehalten, in Wiegebunkern durch Abwiegen portioniert, eventuell in einem Sammelbunker zusammengeführt und dort gegebenenfalls kurzfristig gelagert bevor sie dem Zugabetrichter zugeführt werden. Der Transport der Zugabestoffe erfolgt dabei über Förderrinnen, Geradund Steilförderer. Die Techn. Mitt. AEG-Telefunken 70 (1980) 2/3 zeigen auf Seite 74 im Bild 1 eine solche Beschickungsvorrichtung.

Der Arbeitsablauf beispielsweise in einem Stahlwerk oder die Anforderungen einer nachgeordneten Stranggießanlage oder andere betriebliche Gegebenheiten machen es erforderlich, daß das eingangs genannte Verfahren innerhalb einer eng begrenzten Zeit durchgeführt werden muß. Folglich ist es, um Zeit zu sparen, notwendig, die Zugabestoffe nach Art und Menge so früh wie möglich zu bestimmen, denn das Entnehmen, Abwiegen und Transportieren der einzelnen Zugabestoffe zum Vakuumgefäß erfordert eine nennenswerte Zeitspanne. Deshalb wird der Schmelze zu Beginn des Verfahrens eine Basisprobe entnommen und mit Hilfe eines Prozeßrechners ermittelt, welche und wieviel Zugabestoffe der Schmelze zugeführt werden müssen, um die gewünschte Fertiganalyse zu erreichen. Sobald das Ergebnis vorliegt, werden die Zugabestoffe den Beschickungsbunkem entnommen, gewogen und bereitgestellt. Das Bereitstellen der abgewogenen Mengen geschieht in der Schleusenkammer, im Zugabetrichter, im Sammelbunker, im Wiegebunker und bei größeren Anlagen auch auf den Fördermitteln wie z. B. Förderbändern. Die einzelnen Zugabestoffe müssen auch in der richtigen Reihenfolge zwischengefagert werden, in der sie verwendet werden. Die bereitgestellten Zugabestoffe bleiben solange dort, bis aus metallurgischer Sicht der Zeitpunkt für die Zugabe gekommen ist.

Diese bekannte Verfahrensweise besitzt jedoch den Nachteil, daß häufig Schwierigkeiten im Verfahrensablauf auftreten und ein Verlust an Zugabestoffen oder sogar der Schmelze entsteht. Im praktischen Betrieb kommt es nämlich immer wieder zu falschen Messungen der Basisprobe und zu fehlerhaften Vorhersagen der vom Prozeßrechner verwendeten Prozeßmodelle. Im Anschluß an solche fehlerhaften Meßergebnisse werden während der ersten Stufe der Vakkumbehandlung, beispielsweise während der Entkohlung, die Zugabestoffe entnommen, gewogen und bereitgestellt. Wenn man dann bei einer weiteren Probe feststellt, daß die Zusammensetzung der Schmelze von dem erwarteten Ergebnis abweicht, dann passen die schon bereitgestellten Zugabestoffe hinsichtlich Art und/oder Menge nicht mehr zu der Analyse der Schmelze, das heißt, es läßt sich mit den bereitgestellten Zugabestoffen und/oder deren Mengen der Schmelze nicht die gewünschte Fertiganalyse einstellen. Zu diesem Zeitpunkt befinden sich aber die falschen Zugabestoffe und/oder Mengen bereits auf dem Beschickungsweg, möglicherweise sogar schon ganz oder teilweise in der Schleusenkammer. Lassen sich diese Zugabestoffe dann nicht mehr von dem Beschickungsweg entfernen, ergibt sich eine Schmelze, deren Fertiganalyse von der gewünschten abweicht. Dies kann dazu führen, daß die Schmelze für den vorgesehenen Zweck oder überhaupt unbrauchbar ist. Das ist ein erheblicher wirtschaftlicher Verlust und eine empfindliche Störung des Betriebsablaufs. Selbst wenn sich durch die Zugabe weiterer Zugabestoffe noch die gewünschte Zusammensetzung erreichen läßt, erfordert dies ein erneutes Entnehmen, Wiegen und Zuführen der weiteren Zugabestoffe, was wegen des dadurch bedingten Zeitverlustes den Betriebsablauf auch erheblich stört. Besteht die Möglichkeit, die falschen oder falsch portionierten Zugabestoffe zu entfernen, dann entsteht dafür und durch das erneute Entnehmen, Wiegen und Zuführen, diesmal der richtig gewählten und abgewogenen Zugabestoffe, ein erheblicher Zeitverlust und ein wirtschaftlicher Verlust durch den Ausschuß der Zugabestoffe.

Ein weiterer Nachteil ist, daß auch nachträglich und kurzfristig zuzugebende Kleinmengen an Zugabestoffen, beispielsweise von Legierungsmittel zum Einstellen der Analyse der Schmelze, über den gesamten Beschickungsweg gefördert werden müssen, was bei größeren Anlagen einen nennenswerten Zeitverlust verursacht. Um diesen zu vermeiden, können kleinere Vorratsbehälter an dem Beschickungsrohr zwischen der Vakuumschleuse und dem Vakuumgefäß angeschlossen sein. Folglich müssen solche Vorratsbehälter gasdicht verschlossen sein, damit das Vakuum aufrechterhalten bleibt. Die Zugabe und die Mengenbemessung der Zugabestoffe geschieht mit einem drehbaren Zellrad an jedem Vorratsbehälter (Metallurgical Plant and Technology 6/1979, Seite 48).

Derartige Vorratsbehälter haben den Nachteil, daß sie für größere Mengen und damit für die wichtigsten Zugaben nicht geeignet sind, weil die Zellräder eine zu geringe Menge fördern und deshalb zuviel Zeit verlorengehen würde. Außerdem sind sie auch nur für Zugabestoffe mit geringen Komgrößen geeignet, weil es bei größerem Korn häufig zu Verkantungen und Verklemmungen zwischen Korn und Zellrad kommt. Dann werden die Zellen der Zellräder nicht mehr gleichbleibend und vollständig gefüllt bzw. entleert. Eine genaue Kontrolle über die zugegebene Menge besteht daher nicht. Da die Zellräder die Zugabemengen über deren Volumen bestimmen, unterschiedliche Korngrößen beim selben Zugabestoff aber das Verhältnis zwischen Volumen und Schüttgewicht verändern, ist es vor allem beim Mikrolegieren nicht möglich, die effektive Zugabemenge genau genug zu bestimmen.

Weiterhin besteht bei derartigen Vorratsbehältem, weil sie unter Vakuum stehen, die Gefahr, daß im Falle von Undichtigkeiten staubförmige Zugabestoffe abgesaugt werden und unbeabsichtigt in das Vakuumgefäß gelangen. Geschieht dies bei Kohlenstoff während der Vakuumbehandlung von unberuhigtem Stahl könnte es zu einer Explosion kommen.

Auch das Nachfüllen der Vorratsbehälter ist problematisch. Dazu muß das Vakuum aufgehoben werden, was nur in Behandlungspausen möglich ist, die den Betriebsablauf notwendigerweise unterbrechen. Auch ist eine zusätzliche Beschickungsvorrichtung erforderlich. Das Evakuieren nach einem erneuten Füllen erfordert weitere Zeit. Schließlich ist die Anlagensteuerung auch deutlich aufwendiger.

Der Erfindung liegt das Problem zugrunde, ein Verfahren und eine Anlage zu schaffen, mit denen sich die erforderlichen Zugabestoffe zur Beeinflussung der chemischen Zusammensetzung und/oder zum Einstellen der Temperatur möglichst ohne Zeitverzögerung und ohne die Gefahr von Ausschuß zum richtigen Zeitpunkt und in der richtigen Menge der Schmelze zuführen lassen.

Dieses Problem wird erfindungsgemäß dadurch gelöst, daß bei dem eingangs erwähnten Verfahren die nach einer weiteren Probennahme der Schmelze (Korrekturprobe) benötigten Korrekturmengen an Zugabestoffen an den bereits portionierten Zugabestoffen vorbei über eine Vakuumschleuse der Schmelze zugeführt werden. Mit Hilfe der Korrekturmengen wird für den Fall, daß die vor der Vakuumschleuse bereits portionierten bzw. bereitgestellten Zugabestoffe nach Art und/oder Mengen nach der Probenanalyse nicht mehr richtig sind oder einfach nur ergänzt werden müssen, erreicht, daß die Zugabestoffe, beispielsweise exotherm oxydierbare Stoffe, wie Aluminium oder Kühlschrott oder auch Erz als Sauerstoffträger, insgesamt in der Art und Menge der Schmelze zugegeben werden, ohne in die normale Beschickung eingreifen zu müssen und ohne zusätzliche evakuierte Vorratsbehälter mit Zellräder in Kauf nehmen zu müssen.

Stellt sich beispielsweise bei der Vakuumbehandlung von Stahl nach der Entkohlung durch die Korrekturprobe heraus, daß der Sauerstoffgehalt oder die Stahltemperatur nicht dem aus der Basisprobe errechneten Wert entspricht und folglich die bereits portionierten Legierungsmittel quantitativ oder qualitativ nicht ausreichen, dann läßt sich eine sich aus der Korrekturanalyse ergebende Korrekturmenge eines oder mehrerer Zugabestoffe über die Vakuumschleuse einbringen. Man kann dann zunächst die vorher bereitgestellten, rechnerisch ermittelten Zugabestoffe ergänzen und den Sauerstoffgehalt richtig einstellen, bevor dann die portionierten Zugabestoffe, beispielsweise Legierungsmittel, zugeführt und die Schmelze innerhalb der normalen Zeitspanne fertiggestellt und vergossen wird.

Zur Temperatureinstellung der Schmelze kann Kühlschrott zugegeben oder bei einer Anlage mit Sauerstoffblaseinrichtung die Schmelze chemisch aufgeheizt werden. Um dies jederzeit unabhängig vom restlichen Beschickungssystem durchzuführen, ist es notwendig, das erforderliche Kühl- bzw. Heizmaterial an der Zugabe der Legierungsmittel vorbei zuzugeben.

Die Erfindung betrifft auch eine Anlage zur Durchführung des erfindungsgemäßen Verfahrens, mit einem flüssiges Metall enthaltenden Vakuumgefäß, das über eine Vakuumschleuse zugänglich ist, die eine Schleusenkammer und mindestens einen oberhalb derselben angeordneten Zugabetrichter besitzt. Die Schleusenkammer und der Zugabetrichter besitzen untere Auslaßöffnungen mit gasdichten Verschlüssen.

Während bei den bekannten Anlagen die Schleusenkammer nur einen Zugabetrichter besitzt, sind erfindungsgemäß oberhalb der Schleusenkammer mehrere Zugabetrichter angeordnet. Der zusätzliche und gegebenenfalls weitere Zugabetrichter (Hilfstrichter) eröffnen zusätzliche Beschickungspfade zur Schleusenkammer und damit zur Schmelze. Auf diese Weise lassen sich jederzeit ein oder mehrere Zugabestoffe in der erforderlichen Korrekturmenge innerhalb kurzer Zeit der Schmelze zuführen, und zwar unabhängig davon, was sich im Haupttrichter befindet. Nicht mehr geeignete und/oder falsch abgewogene bzw. portionierte Zugabestoffe können die Fertigstellung der Schmelze weder verhindern noch verzögem. Sie können sogar im Haupttrichter für eine nachfolgende Charge verbleiben.

Vorteilhaft ist es, wenn die Zugabetrichter von unterschiedlicher Größe und/oder unterschiedlicher Bauform sind. Sie können so der Menge des jeweiligen Zugabestoffes und seiner Korngröße angepaßt sein. Zu empfehlen ist dabei eine Größe, die möglichst große Mengen ermöglicht. Zum Mikrolegieren sind jedoch kleine Zugabetrichter sinnvoll. Außerdem läßt sich mit kleinen Zugabetrichtem der zur Verfügung stehende Raum besser ausnutzen.

Besonders zweckmäßig ist es, wenn mindestens einem der Hilfstrichter ein zusätzlicher Bunker oder eine kleinere Bunkergruppe zugeordnet ist. Neben einer Hauptbunkergruppe, die aus etwa zehn bis zwanzig Beschickungsbunkem für verschiedene Zugabestoffe besteht, stehen dann in der Regel kleinere Bunker zum Beschicken der Hilfstrichter mit Legierungsmitteln zur Verfügung. In diesen Hilfsbunkern können zumindest teilweise dieselben Zugabestoffe enthalten sein wie in den Hauptbunkern. Dabei ist es ratsam, wenn die Hilfsbunker mit einer Vorrichtung zum Abzugsverwiegen ausgerüstet sind. Es kann dann von diesen Bunkem aus direkt in einen oder mehrere der Hilfstrichter gefördert werden. Eine Anlage, bei der die Schleusenkammer der Vakuumschleuse mehrere Zugabetrichter besitzt und die Zugabestoffe aufgeteilt sind auf die Haupt- und die Hilfsbunker, erlaubt eine optimale Zugabe von Zugabestoffen ohne zeitliche Verzögerung.

In den Zeichnungen ist die Erfindung anhand von Ausführungsbeispielen veranschaulicht. Es zeigen:
- Fig. 1: eine erfindungsgemäße Anlage, teilweise im vertikalen Schnitt;
- Fig. 2: eine andere Anlage, teilweise im vertikalen Schnitt.

Eine Gießpfanne 1 enthält eine Schmelze 2, in die von oben zwei Tauchrohre 3 und 4 eines darüber angeordneten Umlauf-Vakuumgefäßes 5 ragen. Am Oberteil 5a des Vakuumgefäßes 5 ist eine Unterdruckleitung 6 angeschlossen, über die entstehende Gase abgezogen werden und im Innern des Vakuumgefäßes 5 ein Vakuum erzeugt wird. Mit Hilfe eines Liftgases gelangt die Schmelze 2 durch das Rohr 3 im Kreislauf durch das Vakuumgefäß 5 und das andere Tauchrohr 4 zurück in die Pfanne 1.

Oberhalb der Schmelze 2 mündet ein Beschickungsrohr 7 im Innern des Vakuumgefäßes 5. Es dient der Zuführung von Zugabestoffen, die durch eine Vakuumschleuse 8 zugegeben werden. Die Vakuumschleuse 8 besitzt eine geschlossene Schleusenkammer 9, deren untere Auslaßöffnung mit einem gasdichten Verschluß 10, hier einem sogenannten Glockenverschluß, verschlossen ist. Die Oberseite der Schleusenkammer 9 ist ebenfalls verschlossen. Auf ihr sind zwei Zugabetrichter 11, 12 angeordnet. Es können hier auch weitere Zugabetrichter angeordnet sein. Jeder Zugabetrichter 11, 12 ist mit dem Innenraum der Schleusenkammer 9 über eine Auslaßöffnung verbunden, die jeweils mit einem gasdichten Verschluß 13 bzw. 14 verschlossen ist. Die Verschlüsse 10, 13 und 14 lassen sich wahlweise mit Hilfe von vorzugsweise pneumatischen Arbeitszylindem 15, 16, 17 öffnen und schließen. Die Zugabetrichter 11, 12 sind oben offen.

Zugabestoffe werden zunächst in die Zugabetrichter 11, 12 eingefüllt. Soll der Inhalt eines Zugabetrichters 11, 12 der Schmelze 2 zugeführt werden, wird die Schleusenkammer 9 durch Öffnen eines nicht dargestellten Ventils mit Umgebungsluft geflutet, um das darin befindliche Vakuum abzubauen. Anschließend werden die Verschlüsse 13 und/oder 14 geöffnet, so daß die Zugabestoffe in die Schleusenkammer 9 fallen. Nachdem die Verschlüsse 13, 14 und das beim Fluten mit Umgebungsluft geöffnete Ventil wieder gasdicht geschlossen sind, wird die Schleusenkammer 9 mit der Unterdruckleitung 6 verbunden und so in ihr wieder das Vakuum hergestellt. Erst dann können der Verschluß 10 geöffnet und die Zugabestoffe durch das Beschickungsrohr 7 der Schmelze zugegeben werden. Der Verschluß 10 wird anschließend wieder verschlossen, damit die Schleusenkammer 9 für die Aufnahme weiterer Zugabestoffe wieder zur Verfügung steht.

Oberhalb des größeren Zugabetrichters 11 endet ein Förderband 18, das Zugabestoffe in abgewogenen Mengen von einer nicht dargestellten Hauptbunkergruppe heranfördert und in den Zugabetrichter 11 einfüllt. Oberhalb des kleineren Hilfstrichters 12 endet ein Rohrförderer 19, dessen Mündung mit einer Klappe 20 verschließbar ist. Der Rohrförderer 19 ist unterhalb eines Hilfsbunkers 21 angeordnet. Mit Hilfe von Druckmeßdosen 22, die das jeweilige Gewicht des Hilfsbunkers 21 feststellen, läßt sich eine bestimmte Menge des im Hilfsbunker 21 enthaltenen Zugabestoffes, beispielsweise eines Legierungsmittels, abziehen und über den Rohrförderer 19 dem Zugabetrichter 12 zuführen, was durch Öffnen der zuvor geschlossenen Klappe 20 geschieht.

Dem Hilfstrichter 12 können mehrere Hilfsbunker 21 zugeordnet sein. Außerdem kann die Anlage mehr als zwei Zugabetrichter 11, 12 besitzen. Femer ist es möglich, das Förderband 18 so anzuordnen und auszubilden, daß es auch Zugabestoffe aus den Hauptbunkern in den oder die anderen Zugabetrichter 12 füllen kann.

Im Oberteil 5 a des Vakuumgefäßes 5 befindet sich eine Lanze 25 zum Aufblasen von Sauerstoff für ein chemisches Aufheizen.

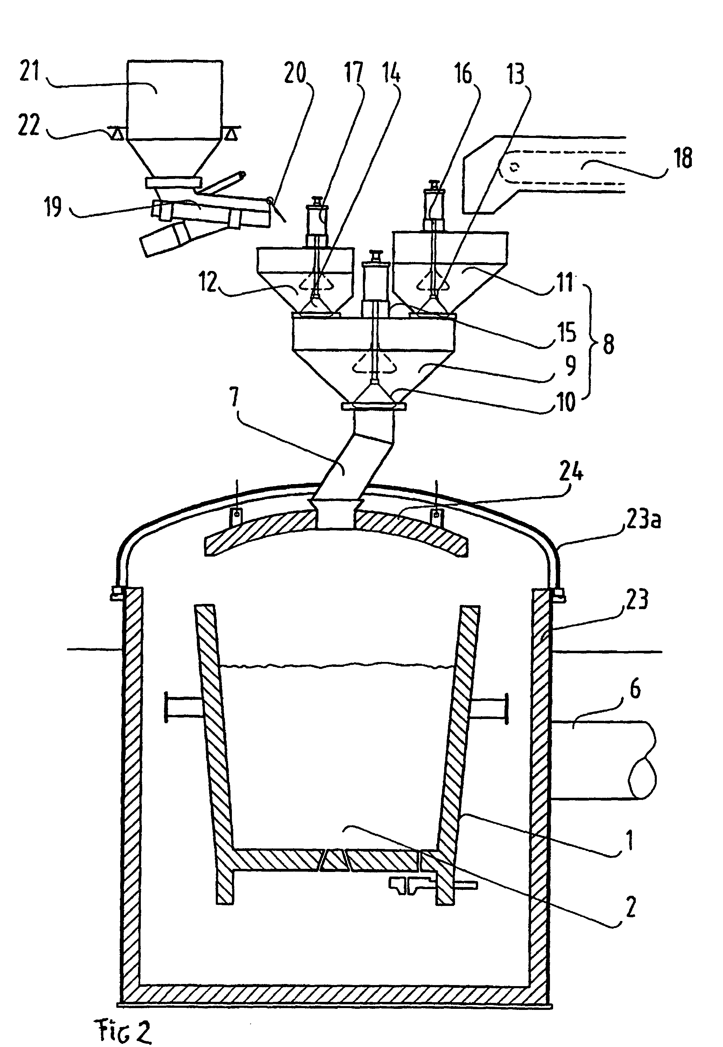

Figur 2 zeigt ein Vakuumgefäß 23 zum Standentgasen. Die Gießpfanne 1 befindet sich mit der Schmelze 2 im Vakuumgefäß 23, und die Unterdruckleitung 6 ist seitlich am Vakuumgefäß 23 angeordnet. Der Kopf des Vakuumgefäßes 23 ist als Deckel 23a ausgebildet, der zum Einsetzen und Entfernen der Gießpfanne 1 abgenommen und wieder gasdicht aufgesetzt werden kann. Die Innenseite des Deckels 23a ist mit einer feuerfesten Abschirmung 24 versehen, in der sich auch die Mündung des Beschickungsrohres 7 befindet.

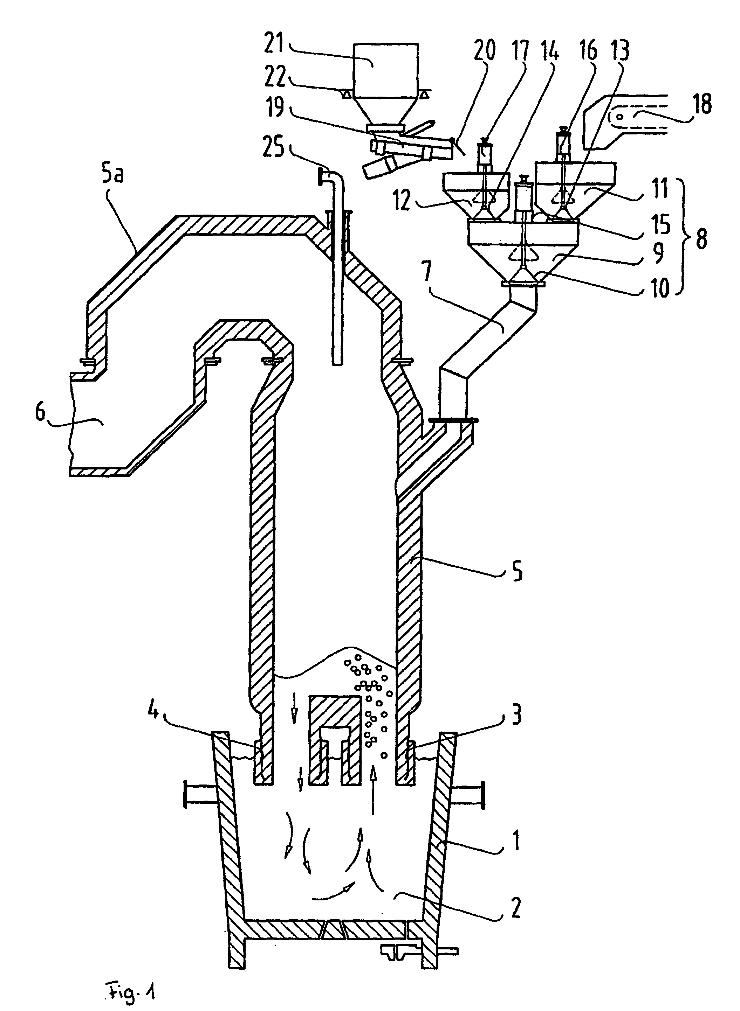

Im übrigen sind in der Figur 2 die einzelnen Teile mit denselben Bezugsziffern wie in Figur 1 versehen.

## Patentansprüche

1. Verfahren zum Vakuumbehandeln von flüssigen Metallen, insbesondere von Stählen, in einer sekundärmetallurgischen Anlage mit portionierten Zugabestoffen, deren Menge aufgrund einer Basisprobe und der Sottanalyse ermittelt, abgewogen und bereitgestellt wird, **dadurch gekennzeichnet, daß** aufgrund einer Korrekturprobe die erforderlichen Korrekturmengen der Zugabestoffe an den portionierten Zugabestoffen vorbei in die Schmelze (2) gebracht werden.

2. Verfahren nach Anspruch 1, **dadurch gekennzeichnet, daß** der Schmelze exotherm oxydierbare Stoffe oder Kühlschrott zum Korrigieren der Temperatur zugesetzt werden.

3. Verwendung einer Anlage mit einem eine Schmelze enthaltenden Vakuumgefäß, das mittels einer Vakuumschleuse (9) mit mehreren oberhalb angeordneten Zugabetrichtem (11, 12) versehen ist, zur Durchführung des Verfahrens nach Anspruch 1 oder 2.

4. Verwendung nach Anspruch 3 bei der Zugabetrichter (11, 12) von unterschiedlicher Größe und/oder von unterschiedlicher Bauform sind, für den Zweck nach Anspruch 3.

5. Verwendung nach Anspruch 3 oder 4, bei der mindestens einem der Zugabetrichter (12) ein oder eine Gruppe von Bunkem (21) zugeordnet sind, für den Zweck nach Anspruch 3.

6. Verwendung nach Anspruch 5, bei der die Bunker (21) mit einer Vorrichtung (22) zum Abzugsverwiegen ausgerüstet sind, für den Zweck nach Anspruch 3.

## Claims

1. Process for vacuum treatment of liquid metals, in particular steels in a secondary metallurgical plant with metered additions, the quantity of which is determined by an initial sample and the target analysis, weighed and made ready for use, **characterised in that** on the basis of a correcting sample the necessary correction quantities of the additions are added to the melt (2) by bypassing the metered additions.

2. Process according to claim 1, **characterised in that** exothermal oxidising materials or cooling scrap are added in order to correct the temperature.

3. Use of a vacuum vessel type plant containing a melt. The vessel would be equipped with a vacuum lock (9) with several addition funnels (11, 12) for carrying out the process according to claims 1 or 2.

4. Application according to claim 3 where the addition funnels (11, 12) have different sizes or are of different types according to the purpose of claim 3.

5. Application according to claim 3 or 4 where at least one of the addition funnels (12) is allocated to one or a group of hoppers (21) for the purpose of claim 3.

6. Application according to claim 5 where the hoppers (21) are equipped with a facility (22) for weighing for the purpose of claim 3.

## Revendications

1. Procédé pour traiter sous vide des métaux liquides, notamment d'aciers, dans une installation métallurgique secondaire, avec des additifs en portions dont la quantité est déterminée et pesée à l'aide d'un échantillon de base et d'une analyse nominale avant d'être mise à disposition, **caractérisé en ce que** les quantités d'ajustement nécessaires des additifs sont incorporées en plus des additifs en portion dans la masse fondue (2) sur la base d'un échantillon d'ajustement.

2. Procédé selon la revendication 1, **caractérisé en ce que** des substances oxydables de façon exothermique ou des ferrailles de refroidissement sont ajoutées à la masse fondue pour rectifier la température.

3. Utilisation d'une installation comprenant un réservoir sous vide contenant une masse fondue qui au moyen d'un sas à vide (9) est équipé de plusieurs trémies (11, 12) placées au-dessus de celui-ci, pour mettre en oeuvre le procédé selon la revendication 1 ou 2.

4. Utilisation selon la revendication 3 selon laquelle les trémies (11, 12) sont de différentes tailles et/ou formes, pour l'objectif exposé dans la revendication 3.

5. Utilisation selon la revendication 3 ou 4 selon laquelle un silo ou un groupe de silos (21) est associé à au moins l'une des trémies (12), pour l'objectif exposé dans la revendication 3.

6. Utilisation selon la revendication 5 selon laquelle les silos (21) sont équipés d'un dispositif (22) pour peser le matériau tout en le délivrant, pour l'objectif exposé dans la revendication 3.
